# EUROPÄISCHE PATENTSCHRIFT

(11) **EP 0 815 539 B1**
(45) Veröffentlichungstag und Bekanntmachung des Hinweises auf die Patenterteilung: **26.09.2001**
(21) Anmeldenummer: 96945835.5
(22) Anmeldetag: 26.10.1996
(51) Int. Cl.: G06T 7/20

(54) **VERFAHREN ZUR ERKENNUNG BEWEGTER OBJEKTE IN ZEITLICH AUFEINANDER FOLGENDEN BILDERN**
METHOD OF DETECTING MOVING OBJECTS IN CHRONOLOGICALLY SUCCESSIVE IMAGES
PROCEDE POUR DETECTER DES OBJETS EN MOUVEMENT DANS DES IMAGES SE SUCCEDANT DANS LE TEMPS

(30) Priorität: 15.01.1996 DE 19601005
(43) Veröffentlichungstag der Anmeldung: 07.01.1998
(73) Patentinhaber: ROBERT BOSCH GMBH, 70442 Stuttgart (DE)
(72) Erfinder: MEYER, Michael, 31079 Sibbesse (DE); HOETTER, Michael, 30989 Gehrden (DE); ROTTMANN, Frank, 81667 München (DE)
(86) Internationale Anmeldenummer: DE9602046
(87) Internationale Veröffentlichungsnummer: WO9726622

(56) Entgegenhaltungen:
- RECORD OF THE ASILOMAR CONFERENCE ON SIGNALS, SYSTEMS AND COMPUTERS, PACIFIC GROVE, OCT. 30 - NOV. 2, 1994, Bd. VOL. 2, Nr. CONF. 28, 30.Oktober 1994, INSTITUTE OF ELECTRICAL AND ELECTRONICS ENGINEERS, Seiten 970-974, XP000533817 GLOYER B ET AL: "VEHICLE DETECTION AND TRACKING FOR FREEWAY TRAFFIC MONITORING"
- SIGNAL PROCESSING THEORIES AND APPLICATIONS, BARCELONA, SEPT. 18 - 21, 1990, Bd. 2, 18.September 1990, TORRES L;MASGRAU E; LAGUNAS M A, Seiten 765-768, XP000365705 GUSE W ET AL: "REGION-ORIENTED CODING OF MOVING VIDEO-MOTION COMPENSATED BY SEGMENT MATCHING"

## Beschreibung

Die Erfindung geht von einem Verfahren zur Erkennung bewegter Objekte in zeitlich aufeinander folgenden Bildern nach der Gattung des Hauptanspruchs aus.

Aus der nicht vorveröffentlichten Patentanmeldung mit dem Aktenzeichen DE A 44 40 671 ist bereits ein Verfahren zur optischen Erkennung bewegter Objekte beschrieben. Zur Ermittlung eines bewegten Objektes wird bei dem bekannten Verfahren ein aktuelles Bild mit einem Referenzbild in bezug auf die Meßgrößen Bildsignaländerung, Textur und Verschiebung verglichen. Wird ein bewegtes Objekt erkannt, wird anschließend eine objektorientierte Analyse der bewegten Objekte mittels einer bildpunktgenauen Änderungsdetektion in bezug auf ein Hintergrundbild durchgeführt. Anschließend werden in einer Objektmaske die zu dem bewegten Objekt gehörenden und zusammenhängenden Bildbereiche gekennzeichnet. Aufgrund einer abschließenden Topologieuntersuchung anhand der Merkmale, Größe und Linienhaftigkeit sowie eine Untersuchung der objektbezogenen Meßgrößen Bildsignaländerung, Textur und Bewegung wird ein bewegtes Objekt erkannt.

Der Artikel "Vehicle Detection and Tracking for Freeway Traffic Monitoring", B. Gloyer et al., Asilomar Conference on Signals, Systems and Computers, 1994, IEEE, Seiten 970 - 974, offenbart ein Verfahren zur Erkennung und Verfolgung von Fahrzeugen in Videoaufnahmen einer Straße. Aus der Videoseqeunz wird ein Bild der Straße ohne bewegte Objekte, insbesondere ohne Fahrzeuge, extrahiert und der Bewegungserkennung per Bilddifferenzanalyse zugrundegelegt. Bewegte Bildbereiche über einer gewissen Mindestgröße werden als relevant eingestuft und durch Vergleich mit anderen Bildern der Videoseqenz verfolgt.

### Vorteile der Erfindung

Das erfindungsgemäße Verfahren mit den Merkmalen des Hauptanspruchs hat demgegenüber den Vorteil, daß Objektmerkmale für ein Objekt nicht nur zu einem Zeitpunkt ermittelt und ausgewertet werden, sondern daß eine zeitliche Folge von Merkmalen ermittelt und ausgewertet wird. Dadurch ist eine Unterscheidung zwischen Objekten, die sich nur kurzzeitig und über eine kurze Distanz bewegen, von Objekten, die sich kontinuierlich über größere Strecken bewegen, möglich. So ist beispielsweise eine Unterscheidung zwischen Personen, die sich gerichtet durch eine Aufnahmesituation bewegen, und Bereichen von Bäumen, die sich im Wind nur über kleine Strecken bewegen, möglich. Auf diese Weise wird die Stabilität des Objektdetektionsverfahrens aufgrund einer verbesserten Unterscheidung von Nutzgrößen und Störgrößen erhöht.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft gemäß Anspruch 2 ist die Ermittlung der Objektbewegung in Abhängigkeit von der Zeit durch Summierung bisheriger Bewegungsvektoren. Dadurch erhält man zusätzlich zu der Information, daß sich ein bewegtes Objekt gerichtet durch eine beobachtete Aufnahmesituation bewegt, eine genaue Information über den Weg des Objektes durch die Aufnahmesituation in Form einer Vektorkette. Auf diese Weise wird die Beurteilung einer Alarmierung wesentlich verbessert.

Vorteilhaft nach Anspruch 3 ist die Beschränkung der objektorientierten Analyse auf die Bildbereiche, in denen durch die blockorientierte Analyse bewegte Objekte festgestellt beziehungsweise in denen durch Bewegungsschätzung Objekte vorhergesagt wurden. Auf diese Weise wird nur in den Bildbereichen eine Analyse durchgeführt, die von Objektbewegung betroffen sind, so daß Rechenaufwand und Rechenzeit eingespart werden.

Vorteilhaft gemäß Anspruch 4 ist die Einbeziehung der mittleren zeitlichen objektbezogenen Texturänderung zur Beurteilung der Notwendigkeit, ein Objekt zu überwachen oder nicht. Auf diese Weise steht ein zusätzliches Merkmal zur Beurteilung des zeitlichen Verhaltens eines Objektes zur Verfügung, so daß die Unterscheidung von Nutzgrößen und Störgrößen weiter verbessert wird.

Vorteilhaft gemäß Anspruch 5 ist die Nutzung der blockorientierten Analyse der Texturänderungen zur Bestimmung der mittleren zeitlichen objektbezogenen Texturänderung. Dadurch wird der Zusatzaufwand zur Bestimmung der mittleren zeitlichen objektbezogenen Texturänderung wesentlich verringert.

Vorteilhaft gemäß Anspruch 6 ist die Aufhebung der Überwachung des Objektes, wenn der Betrag des summierten Bewegungsvektors die vorgegebene zweite Schwelle unterschreitet. Dadurch werden Objekte, deren Bewegung nicht von Interesse ist, wie beispielsweise ein sich hin und her bewegender Ast eines Baumes, von interessierenden Objekten mit einer gerichteten Bewegung unterschieden und gleichzeitig Aufwand gespart, da weniger Objekte überwacht werden müssen.

Vorteilhaft gemäß den Ansprüchen 7 und 8 ist die Erkennung eines überwachten Objektes als bewegtes Objekt, falls bei der zuletzt durchgeführten Bewegungsschätzung kein Bewegungsvektor ermittelt werden konnte beziehungsweise keine Zuordnung des überwachten Objektes zu einem Objekt des aktuellen Bildes möglich ist. Auf diese Weise wird die Bewegung von Objekten, die beispielsweise aufgrund der begrenzten Bildaufnahmefrequenz nicht mehr erfaßbar ist, dennoch erkannt.

Vorteilhaft gemäß Anspruch 9 ist es, vor einer genaueren objektorientierten Analyse die Objekte in bezug auf ihre Größe und ihre Form mit vorgegebenen Größen und vorgegebenen Formen zu vergleichen und einen weiteren Vergleich der Bildsignale der Objekte nicht durchzuführen, wenn die Größe der Objekte beziehungsweise die Formen der Objekte nicht den vorgegebenen Größen beziehungsweise den vorgegebenen Formen entsprechen. Auf diese Weise wird die Effizienz des Verfahrens verbessert.

Vorteilhaft gemäß Anspruch 10 ist die Auslösung von Objektalarm für als bewegt erkannte Objekte. Dadurch läßt sich das Verfahren bei Alarmanlagen einsetzen.

Vorteilhaft gemäß Anspruch 11 ist die Aufhebung der Überwachung von als bewegt erkannten Objekten. Dadurch kann Aufwand, Zeit und Speicherplatz für die Überwachung von noch nicht als bewegt erkannten Objekten eingespart werden.

Vorteilhaft gemäß Anspruch 12 ist die Beurteilung der Bewegungsschätzung durch ein Gütekriterium. Dadurch lassen sich Objekte mit unzuverlässiger Bewegungsschätzung besonders kennzeichnen und überwachen. Dies spielt vor allem dann eine Rolle, wenn die Unzuverlässigkeit der Schätzung darauf beruht, daß das Objekt die Aufnahmesituation verlassen hat oder seine Bewegung aufgrund der begrenzten Bildaufnahmefrequenz nicht erfaßbar ist. In solchen Fällen kann dann vorsichtshalber Objektalarm gegeben werden.

Vorteilhaft gemäß Anspruch 13 ist die effiziente Berechnung der Objektbewegung, indem die Verschiebung des Objektes unter Verwendung der in einer Objektmaske enthaltenen Bildpunkte ermittelt wird.

Vorteilhaft gemäß Anspruch 14 ist die Ermittlung der Objektmaske durch die bildpunktgenaue Änderungsdetektion, wobei jeder mehrfach zusammenhängende, als geändert erkannte Bildbereich mit einer eigenen Bezeichnung gekennzeichnet wird. Dadurch wird eine zusätzliche Vereinfachung des erfindungsgemäßen Verfahrens erreicht.

Vorteilhaft gemäß Anspruch 15 ist eine einfache und wenig aufwendige Zuordnung des überwachten Objekts zu einem Objekt des aktuellen Bildes, indem eine Überlagerung der Objektmasken unter Berücksichtigung der prädizierten Objektbewegung durchgeführt und die Überlappung der umschreibenden Rechtecke geprüft wird.

Vorteilhaft gemäß Anspruch 16 ist die Gewichtung der Größe des bewegten Objektes in Abhängigkeit von der Bildposition. Dadurch läßt sich eine perspektivische Beurteilung der Aufnahmesituation realisieren und die Schwelle für Objekterkennung beziehungsweise Objektalarm für weiter entfernt angeordnete Objekte herabsetzen.

Vorteilhaft gemäß Anspruch 17 ist die Nachführung des zweiten Referenzbildes durch Überschreiben mit dem ersten Referenzbild, wenn kein Objekt überwacht wird und alle Objekte im aktuellen Bild als nicht bewegte Objekte erkannt wurden. Auf diese Weise kann eine einfache Aktualisierung des zweiten Referenzbildes ohne bewegte Objekte realisiert werden.

Vorteilhaft gemäß Anspruch 18 ist die Speicherung von Objekten, die eine kleine Bewegung durchführen, in einem Pufferspeicher und ihre Berücksichtigung im ersten Referenzbild. Auf diese Weise können sehr kleine Bewegungen, die sich aufakkumulieren, erfaßt werden.

Vorteilhaft gemäß Anspruch 19 ist das Überschreiben des ersten Referenzbildes mit einem nachfolgenden aktuellen Bild, wenn ein bewegtes oder mit einer unzuverlässigen Bewegungsschätzung gekennzeichnetes Objekt vorliegt. Dadurch wird die Bildaufnahmefrequenz erhöht, so daß auch entsprechend schnell bewegte Objekte erfaßbar werden.

### Zeichnung

Ein Ausführungsbeispiel der Erfindung ist in der Zeichnung dargestellt und in der nachfolgenden Beschreibung näher erläutert. Es zeigen Figur 1 eine Vorrichtung zur Durchführung des Verfahrens, Figur 2 einen schematischen Programmablauf, Figur 3 und Figur 4 einen schematischen Programmablauf eines Unterprogramms zur objektorientierten Analyse, Figur 5 eine Objektmaske mit Objektverschiebung, Figur 6 eine durch bildpunktgenaue Änderungsdetektion ermittelte Objektmaske, Figur 7 eine Überlagerung von umschreibenden Rechtecken und Figur 8 eine bildpunktgenaue Überlappungsfläche von überlagerten umschreibenden Rechtecken.

### Beschreibung des Ausführungsbeispiels

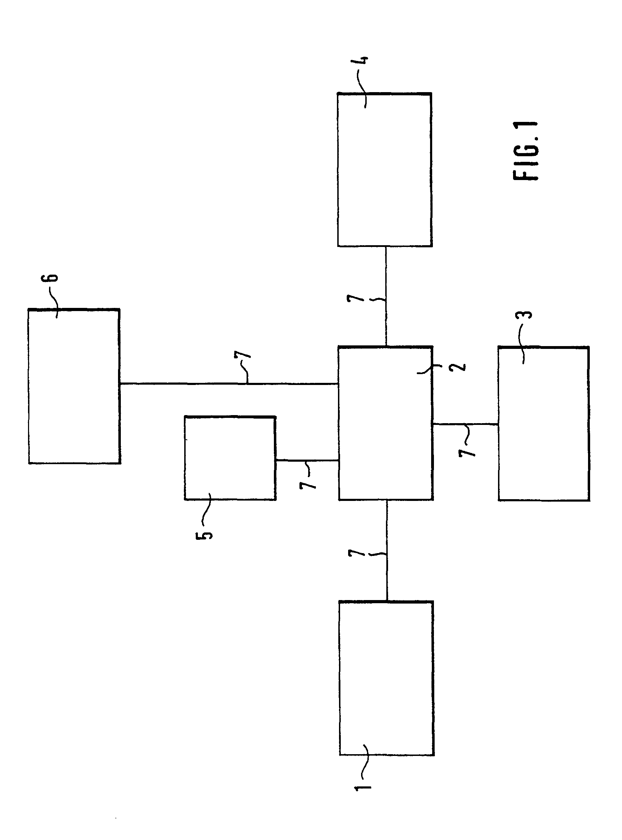

Figur 1 zeigt eine Bildaufnahmeeinheit 1, die über eine Datenleitung 7 mit einer Recheneinheit 2 verbunden ist. Die Recheneinheit 2 ist über eine weitere Datenleitung 7 mit einer Signalanzeige 5 verbunden. Zudem ist die Recheneinheit 2 über eine weitere Datenleitung 7 mit einem Speicher 4 verbunden. Weiterhin ist ein Bildschirm 6 über eine weitere Datenleitung 7 mit der Recheneinheit 2 verbunden. Zusätzlich zeigt die Figur 1 eine Eingabeeinheit 3, die über eine weitere Datenleitung 7 mit der Recheneinheit 2 verbunden ist.

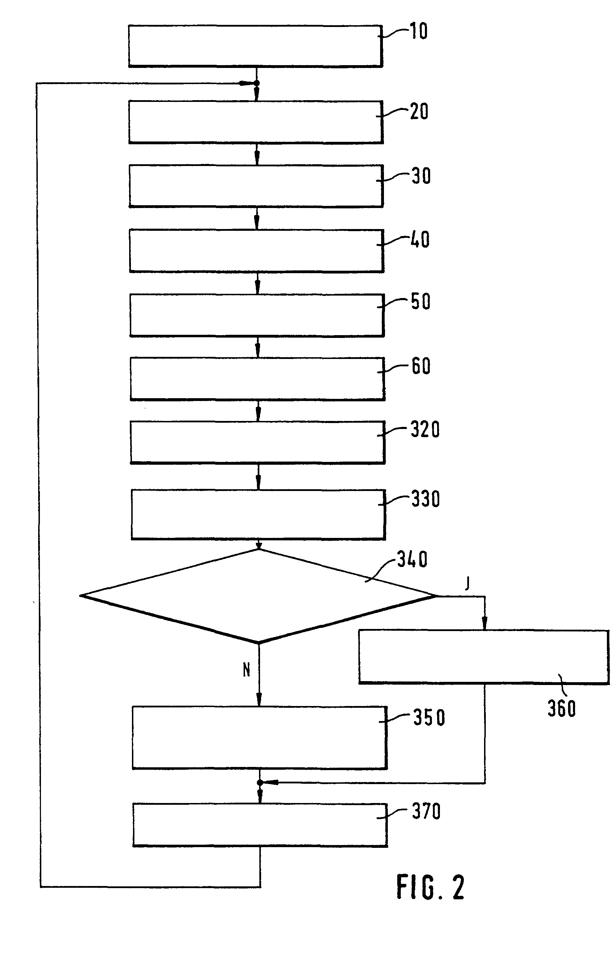

Figur 2 zeigt einen schematischen Programmablauf zur Durchführung des Verfahrens zur Erkennung bewegter Objekte in zeitlich aufeinanderfolgenden Bildern. Das entsprechende Programm ist im Speicher 4 abgelegt und wird von der Recheneinheit 2 abgearbeitet.

Bei Programmpunkt 10 werden von der Bildaufnahmeeinheit 1 zwei zeitlich aufeinanderfolgende Bilder aufgenommen und an die Recheneinheit 2 weitergegeben. Hierbei wird das zeitlich ältere Bild in ein erstes Referenzbild kopiert. Das zeitlich ältere Bild wird außerdem in ein zweites Referenzbild kopiert, das die Aufnahmesituation ohne bewegte Objekte darstellt. Das zeitlich jüngere Bild wird im folgenden als aktuelles Bild bezeichnet.

Die Recheneinheit 2 speichert das aktuelle Bild, das erste und das zweite Referenzbild im Speicher 4 ab und führt eine Einteilung des aktuellen Bildes und des ersten Referenzbildes in Bildblöcke durch. Auf diese Weise wird das gesamte aktuelle Bild und das gesamte erste Referenzbild in gleich große rechteckige Bildblöcke aufgeteilt. Dabei werden zum Beispiel Bildblöcke in einer Größe von 10 x 10 Bildpunkten verwendet.

Bei Programmpunkt 20 wird für jeden Bildblock des aktuellen Bildes durch einen Vergleich mit dem entsprechenden Bildblock des ersten Referenzbildes die Meßgröße Bildsignaländerung berechnet. Die so ermittelte Meßgröße wird dann bei Programmpunkt 30 mit ihrer zeitlichen Verteilungsfunktion - beschrieben durch Mittelwert und Varianz - verglichen. Dabei wird für jeden der Bildblöcke ein Bildsignaländerungsverhältnis rₛ zwischen der zuvor ermittelten Bildsignaländerung und einer für den Bildblock typischen Bildsignaländerung bestimmt, gemäß der Methode des statistischen Signifikanztests. Die typische Bildsignaländerung für einen Bildblock wird bei Beginn des Verfahrens mit einem dem Rauschen der vorzugsweise als Kamera ausgeführten Bildaufnahmeeinheit 1 entsprechenden Wert initialisiert und bei Programmpunkt 320 rekursiv aus der Bildfolge geschätzt. Für die Bildblöcke, deren Bildsignaländerungsverhältnis rₛ größer als eine Bildsignaländerungsschwelle tₛ ist, wird in eine blockgenaue Statusmaske der Status "bewegtes Objekt" eingetragen. Für die anderen Bildblöcke wird in die blockgenaue Statusmaske der Status "kein bewegtes Objekt" eingetragen. Die blockgenaue Statusmaske ist eine binäre Maske, in der bei Überschreiten der Bildsignaländerungsschwelle tₛ der entsprechende Bildblock beziehungsweise der Bildpunkt des Bildblockes mit einer 1 belegt wird. Bei Unterschreitung der Bildsignaländerungsschwelle tₛ wird der entsprechende Bildblock der blockgenauen Statusmaske mit einer Null belegt.

Bei Programmpunkt 40 wird für jeden der Bildblöcke im aktuellen Bild die Meßgröße Textur berechnet.

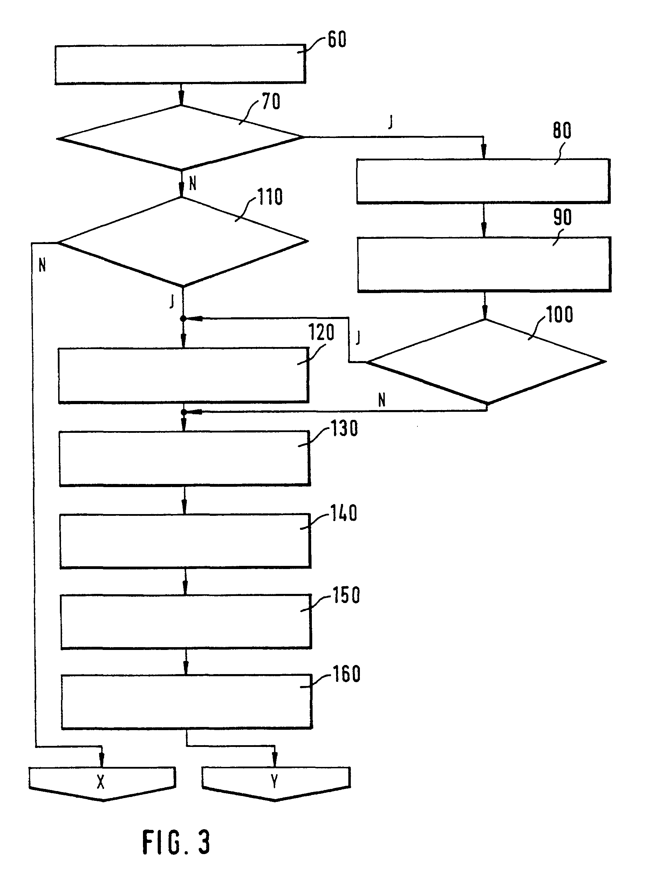

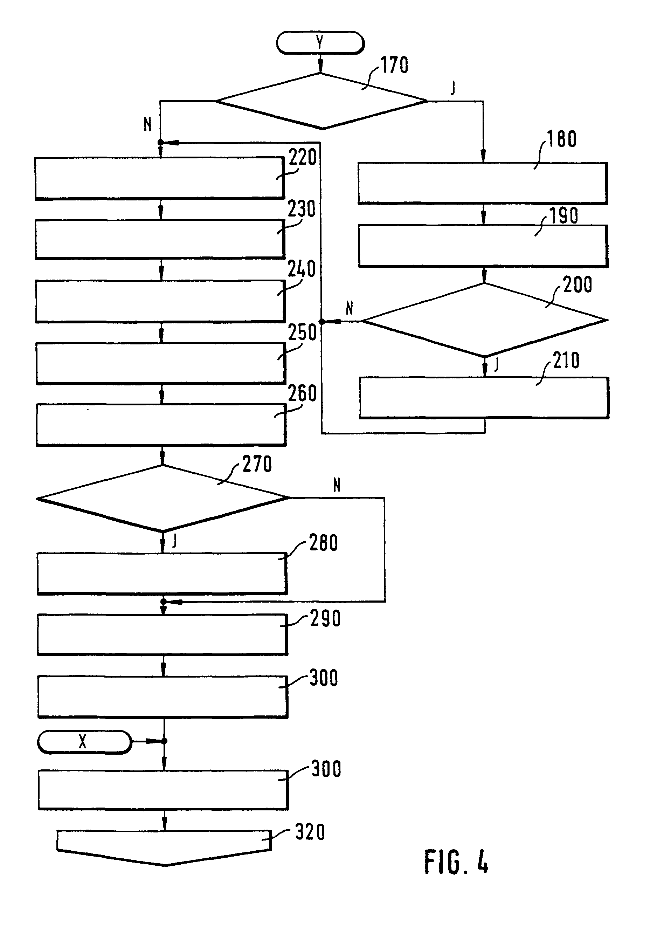

Bei Programmpunkt 50 wird für jeden der Bildblöcke die Abweichung der zuvor ermittelten Textur von der für den Bildblock typischen Textur, charakterisiert durch den zeitlichen Mittelwert der Textur für den betrachteten Bildblock, ermittelt und ein Texturänderungsverhältnis rₜ zwischen der zuvor ermittelten Texturänderung und einer für den Bildblock typischen Texturänderung, charakterisiert durch die zeitliche Varianz der typischen Textur, bestimmt, gemäß der Methode des statistischen Signifikanztests. Die Werte für den zeitlichen Mittelwert und die zeitliche Varianz der Textur werden zu Beginn des Verfahrens mit Werten aus dem ersten Referenzbild unter Berücksichtigung des Kamerarauschens initialisiert und bei Programmpunkt 320 rekursiv aus der Bildfolge geschätzt. Liegt das Texturänderungsverhältnis rₜ unterhalb einer Texturänderungsschwelle tₜ und ist in der blockgenauen Statusmaske der Status "bewegtes Objekt" eingetragen, so wird in der blockgenauen Statusmaske der Status "kein bewegtes Objekt" eingetragen. Danach steht in der blockgenauen Statusmaske für alle Bildblöcke, bei denen das Bildsignaländerungsverhältnis rₛ für die Bildsignaländerung und das Texturänderungsverhältnis rₜ für die Texturänderung oberhalb der entsprechenden Änderungsschwellen tₛ und tₜ liegen, der Status "bewegtes Objekt". Für alle übrigen Bildblöcke ist der Status "kein bewegtes Objekt" eingetragen. Dabei entspricht der Status "bewegtes Objekt" weiterhin einem mit 1 gekennzeichneten Bildblock der blockgenauen Statusmaske und der Status "kein bewegtes Objekt" einem mit einer Null gekennzeichneten Bildblock in der blockgenauen Statusmaske. Bei Programmpunkt 60 wird in ein Unterprogramm verzweigt, das eine objektorientierte Analyse des aktuellen Bildes ermöglicht und dessen Programmablauf schematisch in Figur 3 und Figur 4 dargestellt ist.

Für eine zeitliche Überwachung von Objekten wird eine zweidimensionale Liste der überwachten Objekte verwaltet. Ein Index der zweidimensionalen Liste zählt die Anzahl der überwachten Objekte, der andere Index zählt die Anzahl der Bilder, in denen ein überwachtes Objekt segmentiert wurde.

Diese zweidimensionale Liste wird zu Beginn des Verfahrens als leer initialisiert.

Bei Programmpunkt 70 wird geprüft, ob in der zweidimensionalen Liste der überwachten Objekte Objekte eingetragen sind. Ist dies der Fall, so fährt das Verfahren bei Programmpunkt 80 fort, andernfalls bei Programmpunkt 110.

Bei Programmpunkt 80 wird für alle Objekte in der zweidimensionalen Liste der überwachten Objekte eine Bewegungsschätzung durchgeführt. Die Bewegungsschätzung wird ausgehend von einem dritten Referenzbild, das einem zuvor verwendeten aktuellen Bild entspricht, unter Prädiktion einer neuen Objektposition für das aktuelle Bild durchgeführt, wobei die Ausgangs-Objektpositionen der Objektmaske des zuvor verwendeten aktuellen Bildes zu entnehmen sind. Zu Beginn des Verfahrens ist noch kein drittes Referenzbild vorhanden, da es kein zuvor verwendetes aktuelles Bild gibt, genausowenig wie es eine dazugehörende Objektmaske gibt. Die Bewegungsschätzung kann also zu Beginn des Verfahrens nicht durchgeführt werden, wobei die zweidimensionale Liste der überwachten Objekte zu Beginn des Verfahrens sowieso als leer initialisiert wurde. Für die Bewegungsschätzung wird ein Verfahren verwendet, bei dem innerhalb eines Suchbereichs für jeden möglichen Bewegungsvektor ein Gütekriterium ermittelt und der Bewegungsvektor, der das Gütekriterium am besten erfüllt, relativ zu den anderen möglichen Bewegungsvektoren bewertet wird. Ist das Gütekriterium für den gefundenen Bewegungsvektor mit dem besten Gütekriterium deutlich besser erfüllt, als für alle anderen möglichen Bewegungsvektoren, so liegt eine zuverlässige Schätzung vor. Ansonsten ist die Schätzung als unzuverlässig zu bewerten. Das Ergebnis der Bewegungsschätzung wird in die zweidimensionale Liste der überwachten Objekte eingetragen.

Bei Programmpunkt 90 werden für alle Objekte aus der zweidimensionalen Liste der überwachten Objekte, für die zuvor ein Bewegungsvektor ermittelt werden konnte, unter Verwendung dieses Vektors und der vorherigen Position in der Objektmaske des zuvor verwendeten aktuellen Bildes eine neue Objektposition im aktuellen Bild prädiziert.

In anschließenden Programmschritten werden objektorientierte Analysen durchgeführt. Vorzugsweise werden die objektorientierten Analysen nur für die Bildblöcke durchgeführt, in denen ein mögliches bewegtes Objekt erkannt wurde. Die entsprechenden Bildblöcke sind durch Einsen in der blockgenauen Statusmaske gekennzeichnet. Die objektorientierten Analysen werden auch für die Bildbereiche durchgeführt, die von den prädizierten Objektpositionen eingenommen werden.

So wird nun bei Programmpunkt 90 eine bildpunktgenaue Hilfsmaske erzeugt, in die die prädizierten Objektpositionen bildpunktgenau eingefügt werden.

Bei Programmpunkt 100 wird geprüft, ob es in der blockgenauen Statusmaske Einträge mit dem Status "bewegtes Objekt" gibt. Ist dies der Fall, so wird bei Programmpunkt 120 fortgefahren, ansonsten wird zu Programmpunkt 130 verzweigt.

Bei Programmpunkt 110 wird ebenfalls geprüft, ob es in der blockgenauen Statusmaske Einträge mit dem Status "bewegtes Objekt" gibt. Ist dies der Fall, so wird bei Programmpunkt 120 fortgefahren, andernfalls wird bei Programmpunkt 310 fortgefahren.

Bei Programmpunkt 120 werden alle Bildblöcke, die in der blockgenauen Statusmaske den Status "bewegtes Objekt" haben, bildpunktgenau in die entsprechenden Bereiche der bildpunktgenauen Hilfsmaske eingetragen.

In der bildpunktgenauen Hilfsmaske sind nun alle die Bildpunkte gekennzeichnet, die den objektorientierten Analysen unterzogen werden sollen.

Bei Programmpunkt 130 werden die Bildsignale des aktuellen Bildes in den gemäß der bildpunktgenauen Hilfsmaske objektorientiert zu analysierenden Bildbereichen Bildpunkt für Bildpunkt mit den entsprechenden Bildsignalen des zweiten Referenzbildes verglichen, so daß eine bildpunktgenaue Änderungsmaske ermittelt wird. Die bildpunktgenaue Änderungsmaske stellt die bewegten Objekte dar. Zur Ermittlung der bildpunktgenauen Änderungsmaske wird das Bildsignal jedes Bildpunktes eines zu untersuchenden Bildblocks des aktuellen Bildes mit dem entsprechenden Bildsignal des Bildpunktes des zweiten Referenzbildes verglichen. Die Differenz der Bildsignale wird anschließend mit einer vorgegebenen ersten Schwelle verglichen. Ein Bildpunkt wird in der Änderungsmaske gekennzeichnet, wenn die entsprechende Differenz der Bildsignale über der vorgegebenen ersten Schwelle liegt. Die vorgegebene erste Schwelle kann dabei in Abhängigkeit des zeitlichen Verlaufs des Bildsignals des entsprechenden Bildpunktes und/oder in Abhängigkeit von den Bildsignalen räumlich angrenzender Bildpunkte angepaßt werden.

Bei Programmpunkt 140 werden zusammenhängende Gebiete der Änderungsmaske mit einer Kennung gekennzeichnet und als Objekte erkannt. Das Ergebnis ist eine bildpunktgenaue Objektmaske des aktuellen Bildes. In der bildbpunktgenauen Objektmaske des aktuellen Bildes sind die Bildpunkte der einzelnen Objekte mit einem objektspezifischen Grauwert gekennzeichnet, der für das entsprechende Objekt charakteristisch ist und es eindeutig und von den anderen Objekten unterscheidbar kennzeichnet. Die Anzahl der zusammenhängenden Gebiete ist die Objektanzahl des aktuellen Bildes. Für jedes durch einen charakteristischen Grauwert gekennzeichnetes Objekt der bildpunktgenauen Objektmaske des aktuellen Bildes wird in einer Datenstruktur der Objektstatus "bewegtes Objekt" abgespeichert.

Bei Programmpunkt 150 wird für alle Objekte des aktuellen Bildes, die gemäß der bildpunktgenauen Objektmaske gekennzeichnet sind, die Objektgröße ermittelt. Sie ergibt sich direkt aus der Anzahl der Bildpunkte, die zu einem zusammenhängenden Gebiet gehören. Alle Objekte, die kleiner als eine vorgegebene zweite Größenschwelle sind, werden mit dem Objektstatus "kein bewegtes Objekt" in der Datenstruktur versehen. Alle anderen Objekte werden mit dem Objektstatus "bewegtes Objekt" versehen. Die vorgegebene zweite Größenschwelle wird hierbei angepaßt an die Position des entsprechenden Objektes im aktuellen Bild und ermöglicht so eine perspektivische Auswertung der Aufnahmesituation. Das hierzu verwendete Verfahren ist in der nicht vorveröffentlichten Patentanmeldung DE A 44 40 671 beschrieben.

Bei Programmpunkt 160 wird für alle Objekte, die den Objektstatus "bewegtes Objekt" in der Datenstruktur haben, eine Abweichung der Textur im Objektbereich des aktuellen Bildes von der rekursiv ermittelten Textur der Aufnahmesituation ohne Objekte bestimmt. Dazu wird für die Bildblöcke, die zum Objekt gehören, die gewichtete Summe sₐ der Quadrate der Abweichung der aktuellen Textur vom zeitlichen Mittelwert der Textur und die gewichtete Summe sᵥ der zeitlichen Varianz der Textur bestimmt und in die Datenstruktur eingetragen. Anschließend wird das objektorientierte Texturänderungsverhältnis r_{tobj} aus der Summe der quadrierten Abweichungen sₐ und der Summe der zeitlichen Varianzen sᵥ ermittelt und ebenfalls in die Datenstruktur für die entsprechenden Objekte eingetragen. Das objektorientierte Texturänderungsverhältnis r_{tobj} ist ein Maß für die Abweichung der Textur im Objektbereich von der Textur in diesem Bereich ohne Objekt. Die Gewichtung der Bildblöcke wird dabei in Abhängigkeit von ihrem Flächenanteil am entsprechenden Objekt vorgenommen.

Bei Programmpunkt 170 gemäß Figur 4 wird geprüft, ob sich Objekte in der zweidimensionalen Liste der überwachten Objekte befinden. Ist dies nicht der Fall, fährt das Verfahren fort bei Programmpunkt 220, andernfalls bei Programmpunkt 180.

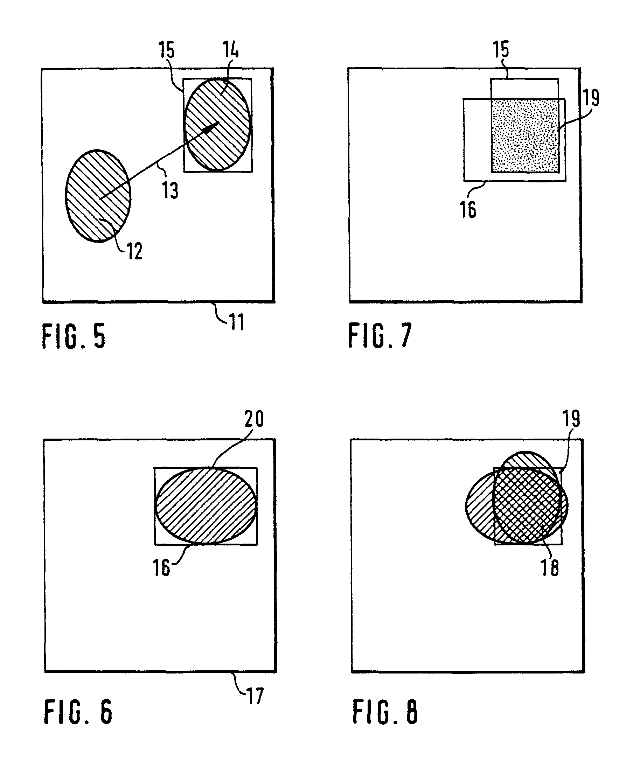

Bei Programmpunkt 180 findet eine Zuordnung von Objekten aus der zweidimensionalen Liste der überwachten Objekte zu den Objekten des aktuellen Bildes statt. Dabei wird für alle Objekte in der zweidimensionalen Liste der überwachten Objekte, deren genaue Position in der Objektmaske des zuvor verwendeten aktuellen Bildes beschrieben ist, eine Zuordnung zu den Objekten des aktuellen Bildes, deren genaue Position in der bildpunktgenauen Objektmaske des aktuellen Bildes beschrieben ist, durchgeführt. In Figur 5 ist die Objektmaske 11 des zuvor verwendeten aktuellen Bildes dargestellt. Sie enthält die Maske 12 eines Objektes. Die zu dem Objekt gehörige Maske 12 in der Objektmaske 11 des zuvor verwendeten aktuellen Bildes wird nun um den für das Objekt im Programmschritt 80 ermittelten Bewegungsvektor, der in Figur 5 durch das Bezugszeichen 13 gekennzeichnet ist, verschoben. Dadurch erhält man eine verschobene Maske 14 des Objektes. Anschließend wird geprüft, ob eine örtliche Überlappung mit Objekten der bildpunktgenauen Objektmaske des aktuellen Bildes, die in der Datenstruktur den Status "bewegtes Objekt" haben, vorhanden ist. Dazu wird für die Maske 14 des verschobenen Objekts ein umschreibendes Rechteck 15 gebildet. Gemäß Figur 6, die die bildpunktgenaue Objektmaske 17 des aktuellen Bildes darstellt, wird auch das dort dargestellte Objekt 20 mit einem umschreibenden Rechteck 16 versehen. Dann wird für alle Objekte mit dem in der Datenstruktur abgelegten Status "bewegtes Objekt" in der bildpunktgenauen Objektmaske des aktuellen Bildes geprüft, ob eine Überlappung der umschreibenden Rechtecke 15 und 16 vorhanden ist. Wenn es eine Überlappung gibt, so wird ein Überlappungsrechteck 19 gemäß Figur 7 ermittelt und innerhalb dieses Überlappungsrechteckes 19 wird eine bildpunktgenaue Überlappungsfläche 18 gemäß Figur 8 bestimmt. Diese bildpunktgenaue Überlappungsfläche 18 befindet sich innerhalb des Überlappungsrechteckes 19. In der bildpunktgenauen Objektmaske des aktuellen Bildes können mehrere Objekte mit dem Status "bewegtes Objekt" vorhanden sein. Es findet eine Zuordnung zu dem Objekt statt, mit dem die bildpunktgenaue Überlappungsfläche maximal ist. Das zugeordnete Objekt in der bildpunktgenauen Objektmaske des aktuellen Bildes erhält dann den Status "bereits verfolgtes Objekt", der in die Datenstruktur eingetragen wird. Die Eigenschaften des Objektes werden anschließend in die zweidimensionale Liste der überwachten Objekte eingetragen. Wenn keine Überlappung mit einem der Objekte in der bildpunktgenauen Objektmaske des aktuellen Bildes vorhanden ist, so wird dies ebenfalls in die zweidimensionale Liste der überwachten Objekte eingetragen. Ein solches Ereignis kann beispielsweise bedeuten, daß das Objekt die Aufnahmesituation verlassen hat oder von einem Hindernis verdeckt wird.

Bei Programmpunkt 190 findet eine Auswertung aller Objekte in der zweidimensionalen Liste der überwachten Objekte statt. Dazu werden für jedes dieser Objekte zwei neue Merkmale ermittelt. Zum einen ein Gesamtbewegungsvektor v als vektorielle Summe der ermittelten Bewegungsvektoren, zum anderen eine mittlere zeitliche objektbezogene Texturänderung. Zur Ermittlung der mittleren zeitlichen objektbezogenen Texturänderung werden die bei der objektorientierten Analyse ermittelten gewichteten Summen der bei der blockorientierten Analyse ermittelten quadratischen Abweichungen der Texturen der Bildblöcke, die mindestens teilweise das Objekt aufweisen, vom zeitlichen Mittelwert der Textur objektorientiert über der Zeit summiert und durch die zeitliche Summe der ebenfalls bei der blockorientierten Analyse ermittelten und gleichermaßen gewichteten Summen der zeitlichen Varianz der Textur dividiert. Der sich ergebende Quotient r_{tges} wird mit einer vorgegebenen vierten Schwelle verglichen. Liegt der Quotient r_{tges} unterhalb dieser Schwelle, so wird das Objekt aus der zweidimensionalen Liste der überwachten Objekte gelöscht. Als nächstes wird der Betrag des Gesamtbewegungsvektors v mit einer vorgegebenen zweiten Schwelle verglichen. Liegt der Betrag unterhalb dieser Schwelle, so wird das Objekt aus der zweidimensionalen Liste der überwachten Objekte gelöscht. Ist der Betrag größer als diese vorgegebene zweite Schwelle oder mit ihr identisch, so wird für den Fall, daß für das Objekt bei der vorausgegangenen Bewegungsschätzung bei Programmpunkt 80 kein Bewegungsvektor ermittelt werden konnte oder für das Objekt kein Anschlußobjekt gefunden wurde, ein bewegtes Objekt erkannt und das Objekt aus der zweidimensionalen Liste gelöscht, da eine Weiterverfolgung des bewegten Objektes nicht gewährleistet ist. Dadurch werden beispielsweise Objekte als bewegt erkannt, die die Aufnahmesituation verlassen haben oder aufgrund ihrer Bewegung von einem Hindernis verdeckt werden. Liegt der Betrag des Gesamtbewegungsvektors v oberhalb einer vorgegebenen dritten Schwelle, so wird ein bewegtes Objekt erkannt und das Objekt gegebenenfalls aus der zweidimensionalen Liste gelöscht beziehungsweise zur Weiterverfolgung in der zweidimensionalen Liste belassen.

Bei Programmpunkt 200 wird geprüft, ob in Programmpunkt 190 bewegte Objekte in der zweidimensionalen Liste der überwachten Objekte erkannt wurden. Ist dies der Fall, so wird bei Programmpunkt 210 Objektalarm ausgelöst und zu Programmpunkt 220 verzweigt, andernfalls wird das Verfahren bei Programmpunkt 220 ohne die Auslösung von Objektalarm fortgesetzt. Bei Programmpunkt 220 wird für die Objekte in der bildpunktgenauen Objektmaske des aktuellen Bildes, die in der Datenstruktur den Status "bewegtes Objekt" haben, die bei Programmpunkt 160 ermittelte Texturabweichung mit einer objektorientierten Texturänderungsschwelle t_{tobj} verglichen. Liegt die Texturabweichung unterhalb dieser Schwelle, so erhält das Objekt den Status "kein bewegtes Objekt" in der Datenstruktur.

Bei Programmpunkt 230 wird für die Objekte in der bildpunktgenauen Objektmaske des aktuellen Bildes, die in der Datenstruktur den Status "bewegtes Objekt" haben, eine objektorientierte Bildsignaländerung ermittelt. Dazu werden für die Bildblöcke, die zum Objekt gehören, sowohl die zeitlichen Mittelwerte der Bildsignaländerungen als auch die aktuellen Bildsignaländerungen aufsummiert. Der Quotient aus den beiden Summen ist das objektorientierte Bildsignaländerungsverhältnis r_{sobj} und ein Maß für die Signifikanz der durch das Objekt hervorgerufenen Bildsignaländerung. Die Bildblöcke werden dabei abhängig von ihrem Flächenanteil am Objekt gewichtet.

Bei Programmpunkt 240 wird für alle Objekte mit dem Status "bewegtes Objekt" das bei Programmpunkt 230 ermittelte objektorientierte Bildsignaländerungsverhältnis r_{sobj} mit einer objektorientierten Bildsignaländerungsschwelle t_{sobj} vergleichen. Liegt das objektorientierte Bildsignaländerungsverhältnis r_{sobj} unterhalb dieser Schwelle, so erhält das Objekt den Status "kein bewegtes Objekt" in der Datenstruktur.

Bei Programmpunkt 250 wird für alle Objekte mit dem in der Datenstruktur abgelegten Status "bewegtes Objekt", die in ihrer bei Programmpunkt 150 ermittelten Objektgröße unterhalb einer vorgegebenen ersten Größenschwelle liegen, eine objektorientierte Bewegungsschätzung durchgeführt. Die erste Größenschwelle ist dabei so gewählt, daß Objekte, deren Größe oberhalb dieser Schwelle liegt, einen so großen Flächenanteil am Gesamtbild besitzen, daß keine sinnvolle Bewegungsschätzung mehr möglich ist. Bei der objektorientierten Bewegungsschätzung wird ausgehend vom aktuellen Bild für alle Objekte der bildpunktgenauen Objektmaske des aktuellen Bildes, die den in der Datenstruktur abgelegten Status "bewegtes Objekt" besitzen, die Bewegung bezüglich des ersten Referenzbildes geschätzt. Das hierzu verwendete Verfahren ermittelt wie bereits beschrieben innerhalb eines Suchbereichs für jeden möglichen Bewegungsvektor ein Gütekriterium und bewertet den Bewegungsvektor, der das Gütekriterium am besten erfüllt, relativ zu den anderen möglichen Bewegungsvektoren. Ist das Gütekriterium für den Bewegungsvektor mit dem am besten erfüllten Gütekriterium deutlich besser erfüllt als für alle anderen möglichen Bewegungsvektoren, so liegt eine zuverlässige Schätzung vor. Ansonsten ist die Schätzung als unzuverlässig zu bewerten. Dieses auch bereits oben beschriebene Verfahren ist zum Beispiel in der Veröffentlichung "Zuverlässigkeit und Effizienz von Verfahren zur Verschiebungsvektorschätzung", Jahrestagung 1995 der deutschen Arbeitsgemeinschaft für Mustererkennung, Bielefeld, von R. Mester und M. Hötter, dargestellt. Wenn der Bewegungsvektor für ein Objekt nicht zuverlässig ermittelt werden kann, erhält das Objekt den Status "unsicheres Objekt". Wenn der Bewegungsvektor zuverlässig ermittelt werden kann, so wird sein Betrag zunächst mit der vorgegebenen zweiten Schwelle verglichen. Liegt der Betrag unterhalb der vorgegebenen zweiten Schwelle, so erhält das Objekt den Status "Objekt mit kleiner Bewegung". Der jeweilige Status wird wieder in der Datenstruktur abgelegt. Liegt der Betrag des Bewegungsvektors oberhalb der vorgegebenen zweiten Schwelle, so wird er mit der vorgegebenen dritten Schwelle verglichen. Ist der Betrag des Bewegungsvektors kleiner als diese vorgegebene dritte Schwelle, so erhält das Objekt den Status "zu verfolgendes Objekt" und wird in die zweidimensionale Liste der überwachten Objekte eingetragen. Liegt der Betrag des Bewegungsvektors über der dritten vorgegebenen Schwelle, so wird das Objekt als bewegtes Objekt erkannt. Es erhält dann den Status "bewegtes Objekt". Der jeweilige Status wird wiederum in die Datenstruktur eingetragen.

Bei Programmpunkt 270 wird geprüft, ob sich Objekte im aktuellen Bild befinden, die in der Datenstruktur den Status "bewegtes Objekt" besitzen. Ist dies der Fall, so wird bei Programmpunkt 280 Objektalarm ausgelöst. Objekte aus der zweidimensionalen Liste der überwachten Objekte, für die Objektalarm ausgelöst wurde, können entweder aus der zweidimensionalen Liste gelöscht oder zur Weiterverfolgung in der zweidimensionalen Liste belassen werden.

Bei Programmpunkt 290 wird die blockgenaue Statusmaske entsprechend der Ergebnisse der objektorientierten Analyse adaptiert. Dazu wird zunächst in alle Bildblöcke der Wert "kein bewegtes Objekt" geschrieben. Dann wird für alle Objekte der jeweils zugehörige Status aus der Datenstruktur in die vom Objekt berührten Bildblöcke eingetragen. Da hierbei ein Bildblock von mehreren Objekten berührt werden kann, erfolgt die Ermittlung des Status in einer festen Reihenfolge, so daß ein wichtigerer Status jeweils einen unwichtigeren Status überschreibt. Die Reihenfolge des Status mit steigender Wichtigkeit ist dabei wie folgt gegeben: "Objekt mit kleiner Bewegung", "unsicheres Objekt", "bereits verfolgtes Objekt", "zu verfolgendes Objekt", "bewegtes Objekt". Für als bewegt erkannte Objekte aus der zweidimensionalen Liste der überwachten Objekte, die nicht aus der zweidimensionalen Liste gelöscht wurden, wird bei erkannter Weiterbewegung erneut Alarm augelöst, so daß man bei Weiterverfolgung eines als bewegt erkannten Objektes unter Umständen eine mehrfache Auslösung von Objektalarm in Kauf nimmt.

Bei Programmpunkt 300 wird, wenn in der zweidimensionalen Liste der überwachten Objekte mindestens ein Objekt eingetragen ist, die bildpunktgenaue Objektmaske des aktuellen Bildes auf die Objektmaske des zuvor verwendeten aktuellen Bildes kopiert, die somit ebenfalls eine bildpunktgenaue Objektmaske darstellt, und das aktuelle Bild wird in das dritte Referenzbild kopiert.

Bei Programmpunkt 310 wird, wenn in der zweidimensionalen Liste der überwachten Objekte keine Objekte eingetragen sind und alle Objekte im aktuellen Bild den Status "kein bewegtes Objekt" in der Datenstruktur haben, das erste Referenzbild als neues zweites Referenzbild gespeichert.

Bei Programmpunkt 320 wird die Statistik in Form von Mittelwert und Varianz der blockorientierten Bildsignaländerung und Textur in Abhängigkeit von der blockgenauen Statusmaske nachgeführt. Hierzu werden IIR-Filter erster Ordnung verwendet. Der Rekursionsfaktor r für diese Filter wird in Abhängigkeit von der blockgenauen Statusmaske eingestellt. In Bildbereichen, in denen die Analyse bewegte Objekte oder mögliche bewegte Objekte detektiert hat, wird beispielsweise ein kleiner Rekursionsfaktor r eingestellt. In den anderen Bildbereichen wird ein mittelgroßer Rekursionsfaktor r eingestellt, so daß durch die Nachführung eine langsame Änderung der Aufnahmesituation berücksichtigt wird, wie sie beispielsweise beim Übergang zwischen Tag und Nacht auftritt.

Bei Programmpunkt 330 werden alle Bildbereiche, für die in der blockgenauen Statusmaske der Status "Objekte mit kleiner Bewegung" eingetragen ist, aus dem ersten Referenzbild in einen Pufferspeicher kopiert.

Bei Programmpunkt 340 wird geprüft, ob es mindestens ein Objekt mit dem in der Datenstruktur abgelegten Status "bewegtes Objekt" oder "unsicheres Objekt" gibt. Wenn dies nicht der Fall ist, so wird bei Programmpunkt 350 das erste Referenzbild mit dem aktuellen Bild überschrieben, und anschließend wird das aktuelle Bild mit einem neuen Videobild von der Bildaufnahmeeinheit 1 überschrieben. Gibt es mindestens ein Objekt mit dem Status "bewegtes Objekt" oder "unsicheres Objekt" in der Datenstruktur, so werden bei Programmpunkt 360 das erste Referenzbild und das aktuelle Bild mit neuen Videobildern von der Bildaufnahmeeinheit 1 überschrieben. Auf diese Weise wird die Bildaufnahmefrequenz erhöht, so daß auch schneller bewegte Objekte erfaßt werden können. Das Verfahren fährt dann fort bei Programmpunkt 370.

Bei Programmpunkt 370 werden alle Bildbereiche, für die in der blockgenauen Statusmaske der Status "Objekt mit kleiner Bewegung" eingetragen ist, aus dem Pufferspeicher in das erste Referenzbild kopiert. Durch diese Vorgehensweise können sehr kleine Bewegungen, die sich aufakkumulieren, erfaßt werden.

Das Verfahren fährt fort bei Programmpunkt 20.

Zusätzlich oder alternativ zu der bei Programmpunkt 150 ermittelten Objektgröße kann auch ein Formmerkmal bestimmt werden, um Objekte, deren Formen vorgegebene Anforderungen nicht erfüllen, nicht als bewegte Objekte zu erkennen und einen objektbezogenen Vergleich ihrer Bildsignale zur Einsparung von Rechenaufwand zu vermeiden. Als Formmerkmal kann beispielsweise die Linienhaftigkeit der zusammenhängenden Gebiete ermittelt werden. Zur Ermittlung der Linienhaftigkeit wird die maximale Ausdehnung e des entsprechenden Objektes ermittelt. Dazu werden die Bildpunkte eines zusammenhängenden Gebietes ermittelt, die einen maximalen Abstand voneinander aufweisen. Als Meßgröße der Linienhaftigkeit wird das Quadrat des maximalen Abstandes, bezogen auf die Fläche des Objektes verwendet: Linienhaftigkeit = e² : A, wobei mit e der maximale Abstand zweier Bildpunkte des Objektes und mit A die Anzahl der Bildpunkte des Objektes bezeichnet sind. Objekte, deren Linienhaftigkeit oberhalb einer vorgegebenen Linienhaftigkeitsschwelle liegt, wie dies beispielsweise bei Ästen der Fall ist, werden nicht weiter untersucht und erhalten den Status "kein bewegtes Objekt" in der Datenstruktur.

## Patentansprüche

1. Verfahren zur Erkennung bewegter Objekte in zeitlich aufeinander folgenden Bildern, wobei für eine blockorientierte Analyse ein aktuelles Bild in Bildblöcke eingeteilt wird, für jeden Bildblock ein Bildsignal des aktuellen Bildes mit einem Bildsignal eines entsprechenden Bildblockes eines ersten Referenzbildes, das in der zeitlichen Folge der Bilder dem aktuellen Bild vorausgeht, verglichen wird,
indem insbesondere eine Bildsignaländerung und/oder eine Texturänderung ermittelt wird, **dadurch gekennzeichnet, daß** für eine Änderungsdetektion die Differenz zwischen den Bildsignalen des aktuellen Bildes und den Bildsignalen eines zweiten Referenzbildes ohne bewegte Objekte bildpunktgenau mit einer vorgegebenen ersten Schwelle verglichen wird, daß bei Überschreiten der vorgegebenen ersten Schwelle in einer objektorientierten Analyse die Größe und/oder die Form eines Objektes ermittelt wird und die Bildsignale, die das bewegte Objekt darstellen, mit den Bildsignalen des entsprechenden Bildbereichs des ersten Referenzbildes, insbesondere durch Ermittlung einer Bildsignaländerung und/oder einer Texturänderung, verglichen werden, daß für mindestens ein bewegtes Objekt des aktuellen Bildes, das eine vorgegebene erste Größenschwelle unterschreitet, eine Bewegungsschätzung durch Zuordnung zu einem entsprechenden Bildbereich des ersten Referenzbildes und Bildung eines zugehörigen Bewegungsvektors durchgeführt wird, daß bei Überschreiten einer vorgegebenen zweiten Schwelle durch den Betrag des geschätzten Bewegungsvektors das Objekt einer zeitlichen Überwachung zugeführt wird und daß bei Überschreiten einer vorgegebenen dritten Schwelle durch den Betrag des geschätzten Bewegungsvektors das Objekt als bewegtes Objekt erkannt wird.

2. Verfahren nach Anspruch 1, **dadurch gekennzeichnet, daß** für mindestens ein zeitlich überwachtes Objekt eine Bewegungsschätzung, ausgehend von einem dritten Referenzbild, das einem zuvor verwendeten aktuellen Bild entspricht, unter Bildung eines zugehörigen Bewegungsvektors und entsprechender Prädiktion einer neuen Objektposition für das aktuelle Bild durchgeführt wird, daß bei der bildpunktgenauen Änderungsdetektion die Differenz zwischen den Bildsignalen an der prädizierten Objektposition des aktuellen Bildes und den entsprechenden Bildsignalen des zweiten Referenzbildes bildpunktgenau mit der vorgegebenen ersten Schwelle verglichen wird, daß bei Überschreiten der vorgegebenen ersten Schwelle mit einer objektorientierten Analyse die Größe und/oder die Form eines Objektes ermittelt wird und die Bildsignale, die das überwachte Objekt darstellen, objektorientiert mit den Bildsignalen des entsprechenden Bildbereichs des ersten Referenzbildes durch Ermittlung der Texturänderung verglichen werden, daß eine Zuordnung des überwachten Objektes zu einem Objekt des aktuellen Bildes durch Überlagerung der durch die Bewegungsschätzung vorhergesagten Objektposition mit einer entsprechenden bei der objektorientierten Analyse ermittelten Objektposition im aktuellen Bild durchgeführt wird, daß die Bewegung des überwachten Objektes in Abhängigkeit von der Zeit durch Summierung bisheriger Bewegungsvektoren ermittelt wird und daß bei Überschreiten der vorgegebenen dritten Schwelle durch den Betrag des summierten Bewegungsvektors das überwachte Objekt als bewegtes Objekt erkannt wird.

3. Verfahren nach Anspruch 1 oder 2, **dadurch gekennzeichnet, daß** die objektorientierte Analyse nur in den Bildbereichen durchgeführt wird, in denen durch die blockorientierte Analyse bewegte Objekte festgestellt und/oder in denen durch Bewegungsschätzung Objekte vorhergesagt wurden.

4. Verfahren nach Anspruch 1, 2 oder 3, **dadurch gekennzeichnet, daß** für das überwachte Objekt die mittlere zeitliche objektbezogene Texturänderung ermittelt wird und daß bei Unterschreiten einer vorgegebenen vierten Schwelle für die mittlere zeitliche objektbezogene Texturänderung die Überwachung des Objektes aufgehoben wird.

5. Verfahren nach einem der vorherigen Ansprüche, **dadurch gekennzeichnet, daß** zur Ermittlung der mittleren zeitlichen objektbezogenen Texturänderung die bei der blockorientierten Analyse ermittelten quadratischen Abweichungen der Texturen der Bildblöcke, die mindestens teilweise das Objekt aufweisen, vom zeitlichen Mittelwert der Textur gewichtet summiert werden, wobei das Gewicht der Summanden proportional zu der Fläche des Bildblockes gewählt wird, mit der der Bildblock das Objekt abdeckt und daß die gewichteten Summen objektorientiert über der Zeit summiert und durch die zeitliche Summe der ebenfalls bei der blockorientierten Analyse ermittelten und gleichermaßen gewichteten Summen der zeitlichen Varianz der Textur dividiert werden.

6. Verfahren nach einem der vorherigen Ansprüche, **dadurch gekennzeichnet, daß** bei Unterschreiten der vorgegebenen zweiten Schwelle durch den Betrag des summierten Bewegungsvektors des überwachten Objektes die Überwachung des Objektes aufgehoben wird.

7. Verfahren nach einem der vorherigen Ansprüche, **dadurch gekennzeichnet, daß** bei Überschreiten der vorgegebenen zweiten Schwelle durch den Betrag des summierten Bewegungsvektors des überwachten Objektes das Objekt als bewegtes Objekt erkannt wird, falls bei der zuletzt durchgeführten Bewegungsschätzung kein zuverlässiger Bewegungsvektor ermittelt werden konnte.

8. Verfahren nach einem der vorherigen Ansprüche, **dadurch gekennzeichnet, daß** bei Überschreiten der vorgegebenen zweiten Schwelle durch den Betrag des summierten Bewegungsvektors des überwachten Objektes das Objekt als bewegtes Objekt erkannt wird, falls keine Zuordnung des überwachten Objektes zu einem Objekt des aktuellen Bildes möglich ist.

9. Verfahren nach einem der vorherigen Ansprüche, **dadurch gekennzeichnet, daß** Objekte, deren Größe unter einer vorgegebenen zweiten Größenschwelle liegt und Objekte, deren Formen vorgegebene Anforderungen nicht erfüllen, nicht als bewegte Objekte erkannt werden und ein objektbezogener Vergleich ihrer Bildsignale unterbleibt.

10. Verfahren nach einem der vorherigen Ansprüche, **dadurch gekennzeichnet, daß** für erkannte bewegte Objekte Objektalarm ausgelöst wird.

11. Verfahren nach einem der vorherigen Ansprüche, **dadurch gekennzeichnet, daß** für erkannte bewegte Objekte eine bestehende Überwachung dieser Objekte aufgehoben wird.

12. Verfahren nach einem der vorherigen Ansprüche, **dadurch gekennzeichnet, daß** zur Bewegungsschätzung innerhalb eines vorgegebenen Suchbereichs für mögliche Bewegungsvektoren ein Gütekriterium ermittelt wird, daß die Schätzung als zuverlässig bewertet wird, wenn der Bewegungsvektor mit dem besten Gütekriterium ein deutlich besseres Gütekriterium aufweist, als die anderen möglichen Bewegungsvektoren und daß die Schätzung ansonsten als unzuverlässig bewertet wird.

13. Verfahren nach einem der vorherigen Ansprüche, **dadurch gekennzeichnet, daß** die Objektbewegung durch eine Verschiebung der in einer Objektmaske enthaltenen Bildpunkten ermittelt wird.

14. Verfahren nach einem der vorherigen Ansprüche, **dadurch gekennzeichnet, daß** die Ermittlung der Objektmaske durch die bildpunktgenaue Änderungsdetektion erfolgt und jeder zusammenhängende, als geändert erkannte Bildbereich mit einer Kennung gekennzeichnet wird.

15. Verfahren nach einem der vorherigen Ansprüche, **dadurch gekennzeichnet, daß** für die Feststellung einer Zuordnung des überwachten Objektes zu einem Objekt des aktuellen Bildes die Objektmaske des aktuellen Bildes mit der Objektmaske des zuvor verwendeten aktuellen Bildes unter Berücksichtigung der prädizierten Objektbewegung überlagert wird, wobei für eine eindeutige Zuordnung die umschreibenden Rechtecke der entsprechenden Objekte überlappen müssen.

16. Verfahren nach einem der vorherigen Ansprüche, **dadurch gekennzeichnet, daß** die Größe des bewegten Objektes in Abhängigkeit von der Bildposition gewichtet ermittelt wird.

17. Verfahren nach einem der vorherigen Ansprüche, **dadurch gekennzeichnet, daß** das erste Referenzbild in das zweite Referenzbild kopiert wird, wenn kein Objekt überwacht wird und alle Objekte im aktuellen Bild als nicht bewegte Objekte erkannt wurden.

18. Verfahren nach einem der vorherigen Ansprüche, **dadurch gekennzeichnet, daß** die Bildblöcke mit Objekten, die eine kleine Bewegung durchführen, aus dem ersten Referenzbild in einen Pufferspeicher kopiert werden und daß nach Änderung des ersten Referenzbildes die Bildblöcke mit den Objekten kleiner Bewegung aus dem Pufferspeicher wieder in das erste Referenzbild kopiert werden.

19. Verfahren nach einem der vorherigen Ansprüche, **dadurch gekennzeichnet, daß** das erste Referenzbild mit dem aktuellen Bild überschrieben wird, wenn kein bewegtes oder mit einer unzuverlässigen Bewegungsschätzung gekennzeichnetes Objekt vorliegt und daß andernfalls das erste Referenzbild mit einem nachfolgenden aktuellen Bild überschrieben wird.

## Claims

1. Method for identifying moving objects in chronologically successive images, in which case, for a block-oriented analysis, a current image is divided into image blocks, for each image block an image signal of the current image is compared with an image signal of a corresponding image block of a first reference image which precedes the current image in the chronological sequence of the images,
in particular by an image signal change and/or a texture change being determined, **characterized in that**, for a change detection, the difference between the image signals of the current image and the image signals of a second reference image without moving objects is compared, with pixel accuracy, with a predetermined first threshold, in that in the case where the predetermined first threshold is exceeded, in an object-oriented analysis, the size and/or the form of an object is determined and the image signals which represent the moving object are compared with the image signals of the corresponding image area of the first reference image, in particular by determination of an image signal change and/or a texture change, in that, for at least one moving object of the current image which falls below a predetermined first size threshold, a motion estimation is carried out by assignment to a corresponding image area of the first reference image and formation of an associated motion vector, in that in the case where a predetermined second threshold is exceeded by the magnitude of the estimated motion vector, the object is fed to a temporal monitoring, and in that in the case where a predetermined third threshold is exceeded by the magnitude of the estimated motion vector, the object is identified as a moving object.

2. Method according to Claim 1, **characterized in that**, for at least one temporally monitored object, a motion estimation is carried out, based on a third reference image corresponding to a previously used current image, with formation of an associated motion vector and corresponding prediction of a new object position for the current image, in that, in the case of the pixel-accurate change detection, the difference between the image signals at the predicted object position of the current image and the corresponding image signals of the second reference image is compared, with pixel accuracy, with the predetermined first threshold, in that in the case where the predetermined first threshold is exceeded, with an object-oriented analysis, the size and/or the form of an object is determined and the image signals which represent the monitored objects are compared, in an object-oriented manner, with the image signals of the corresponding image area of the first reference image by determination of the texture change, in that an assignment of the monitored object to an object of the current image is carried out by superposing the object position predicted by the motion estimation with a corresponding object position - determined during the object-oriented analysis - in the current image, in that the motion of the monitored object is determined as a function of time by the summation of previous motion vectors, and in that in the case where the predetermined third threshold is exceeded by the magnitude of the summed motion vector, the monitored object is identified as a moving object.

3. Method according to Claim 1 or 2, **characterized in that** the object-oriented analysis is carried out only in the image areas in which moving objects have been ascertained by the block-oriented analysis and/or in which objects have been predicted by motion estimation.

4. Method according to Claim 1, 2 or 3, **characterized in that** the average temporal object-related texture change is determined for the monitored object, and in that, in the case of the undershooting of a predetermined fourth threshold for the average temporal object-related texture change, the monitoring of the object is cancelled.

5. Method according to one of the preceding claims, **characterized in that**, in order to determine the average temporal object-related texture change, the squared deviations - determined during the block-oriented analysis - of the textures of the image blocks which at least partially have the object are summed in a manner weighted by the temporal average value of the texture, the weight of the addends being chosen to be proportional to the area of the image block with which the image block covers the object, and in that the weighted sums are summed in an object-oriented manner over time and are divided by the temporal sum of the sums of the temporal variance of the texture, the said sums likewise being determined during the block-oriented analysis and equally weighted.

6. Method according to one of the preceding claims, **characterized in that** in the case where the predetermined second threshold is undershot by the magnitude of the summed motion vector of the monitored object, the monitoring of the object is cancelled.

7. Method according to one of the preceding claims, **characterized in that** in the case where the predetermined second threshold is exceeded by the magnitude of the summed motion vector of the monitored object, the object is identified as a moving object if a reliable motion vector could not be determined during the last motion estimation carried out.

8. Method according to one of the preceding claims, **characterized in that** in the case where the predetermined second threshold is exceeded by the magnitude of the summed motion vector of the monitored object, the object is identified as a moving object if an assignment of the monitored object to an object of the current image is not possible.

9. Method according to one of the preceding claims, **characterized in that** objects whose size is below a predetermined second size threshold and objects whose forms do not fulfil the predetermined requirements are not identified as moving objects and an object-related comparison of their image signals does not happen.

10. Method according to one of the preceding claims, **characterized in that** object alarm is triggered for identified moving objects.

11. Method according to one of the preceding claims, **characterized in that**, for identified moving objects, an existing monitoring of these objects is cancelled.

12. Method according to one of the preceding claims, **characterized in that** a quality criterion is determined for the motion estimation within a predetermined search area for possible motion vectors, in that the estimation is assessed as reliable if the motion vector with the best quality criterion has a distinctly better quality criterion than the other possible motion vectors, and in that the estimation is otherwise assessed as unreliable.

13. Method according to one of the preceding claims, **characterized in that** the object motion is determined by a displacement of the pixels contained in an object mask.

14. Method according to one of the preceding claims, **characterized in that** the object mask is determined by the pixel-accurate change detection and each contiguous image area identified as having changed is marked by an identifier.

15. Method according to one of the preceding claims, **characterized in that**, for ascertaining an assignment of the monitored object to an object of the current image, the object mask of the current image is superposed with the object mask of the previously used current image, with account being taken of the predicted object motion, in which case, for an unambiguous assignment the circumscribing rectangles of the corresponding objects must overlap.

16. Method according to one of the preceding claims, **characterized in that** the size of the moving object is determined in a weighted manner as a function of the image position.

17. Method according to one of the preceding claims, **characterized in that** the first reference image is copied into the second reference image if no object is monitored and all objects in the current image have been identified as non-moving objects.

18. Method according to one of the preceding claims, **characterized in that** the image blocks with objects which carry out a small movement are copied from the first reference image into a buffer memory, and in that after the change of the first reference image, the image blocks with the objects exhibiting a small movement are copied from the buffer memory back into the first reference image.

19. Method according to one of the preceding claims, **characterized in that** the first reference image is overwritten by the current image if no moving object or object marked by an unreliable motion estimation is present, and in that the first reference image is otherwise overwritten by a subsequent current image.

## Revendications

1. Procédé de reconnaissance d'objets mobiles dans des images successives dans le temps, selon lequel,
pour une analyse à orientation de blocs, on subdivise une image actuelle en blocs images,
pour chaque bloc image on compare un signal d'image de l'image actuelle à un signal d'image d'un bloc d'image correspondant d'une première image de référence qui précède l'image actuelle dans la succession chronologique des images,
on détermine une variation de signal d'image et/ou une variation de texture,
**caractérisé en ce que**
- pour une détection de variation, on compare la différence entre les signaux images de l'image actuelle et les signaux images d'une seconde image de référence sans objet mobile, à la précision du point image, par rapport à un premier seuil prédéfini,
- en cas de dépassement du premier seuil prédéterminé dans une analyse à orientation objet, on détermine la taille et/ou la forme d'un objet et on compare les signaux d'images représentant l'objet en mouvement ou les signaux d'images de la zone d'image correspondante de la première image de référence, notamment en déterminant une variation de signal image et/ou une variation de texture,
- pour au moins un objet mobile de l'image actuelle, on dépasse un premier seuil dimensionnel prédéterminé, on évalue le mouvement en l'attribuant à une zone d'image correspondante de la première image de référence, et on forme un vecteur de mouvement correspondant,
- en cas de dépassement vers le haut d'un second seuil prédéfini par l'amplitude du vecteur de mouvement évaluée, on applique l'objet à une surveillance dans le temps et,
- en cas de dépassement vers le haut d'un troisième seuil prédéterminé, par l'amplitude du vecteur de mouvement évaluée, on reconnaît l'objet comme objet mobile.

2. Procédé selon la revendication 1,
**caractérisé en ce que**
- pour au moins un objet surveillé dans le temps, correspondant à une évaluation de mouvement, en partant d'une troisième image de référence qui correspond à une image actuelle utilisée antérieurement, en formant un vecteur de mouvement correspondant et avec une prévision correspondante d'une nouvelle position d'objet pour l'image actuelle et pour la détection de variation à la précision du point image, on compare la différence entre les signaux images dans une position d'objet prévisionnelle de l'image actuelle, et les signaux d'images correspondants de la seconde image de référence, comme image précise avec un premier seuil prédéfini,
- en cas de dépassement vers le haut du premier seuil prédéfini avec une analyse à orientation objet, on détermine la taille et/ou la forme d'un objet et on compare les signaux images qui représentent l'objet à surveiller, avec orientation objet sur les signaux d'images de la plage d'images correspondante de la première image de référence, par détermination de la variation de texture, et
- on effectue une attribution de l'objet surveillé à un objet d'image actuelle par combinaison de la position d'objet prédéfinie par l'évaluation du mouvement, à une analyse à orientation objet de la position objet déterminée dans l'image actuelle,
- le mouvement de l'objet surveillé se déterminant en fonction du temps par addition du vecteur de mouvement actuel et, en cas de dépassement du seuil prédéterminé, on reconnaît le seuil par l'amplitude du vecteur de mouvement, additionnée pour l'objet surveillé comme objet en mouvement.

3. Procédé selon la revendication 1 ou 2,
**caractérisé en ce que**
l'analyse à orientation objet n'est effectuée que dans les zones d'images dans lesquelles on a constaté des objets mobiles par l'analyse à orientation d'objet, et/ou dans lesquelles on peut prévoir des objets à évaluation de mouvement.

4. Procédé selon l'une quelconque des revendications 1, 2, 3,
**caractérisé en ce que**
pour l'objet à surveiller, on détermine la variation de texture moyenne rapportée à l'objet en fonction du temps et, en cas de dépassement vers le bas d'un quatrième seuil prédéfini pour la variation de texture moyenne rapportée à l'objet dans le temps, on supprime la surveillance de l'objet.

5. Procédé selon l'une quelconque des revendications précédentes,
**caractérisé en ce que**
pour déterminer la variation de texture moyenne dans le temps, rapportée à l'objet et pour laquelle les déviations quadratiques obtenues par l'analyse à orientation de blocs pour les textures des blocs images ont au moins en partie les caractéristiques de l'objet, on pondère selon la valeur moyenne dans le temps de la texture et ces valeurs sont additionnées, le point de la somme étant proportionnel à la surface du bloc image, on recouvre le bloc image avec l'objet, et la somme pondérée à orientation objet est additionnée en fonction du temps, la somme dans le temps étant également obtenue à partir d'une analyse avec orientation de blocs, en étant en même temps pondérée pour être divisée par la variance résiduelle de la texture.

6. Procédé selon l'une quelconque des revendications précédentes,
**caractérisé en ce qu'**
en cas de dépassement vers le bas du second seuil prédéfini par l'amplitude du vecteur de mouvement additionnée de l'objet à surveiller, on supprime la surveillance de l'objet.

7. Procédé selon l'une quelconque des revendications précédentes,
**caractérisé en ce qu'**
en cas de dépassement vers le haut du second seuil prédéterminé par l'amplitude du vecteur de mouvement additionnée de l'objet à surveiller, on reconnaît l'objet comme objet mobile si, dans le cas de l'évaluation de mouvement effectuée en dernier lieu, on n'a pu obtenir aucun vecteur de mouvement fiable.

8. Procédé selon l'une quelconque des revendications précédentes,
**caractérisé en ce qu'**
en cas de dépassement du second seuil prédéfini par l'amplitude du vecteur de mouvement additionnée pour l'objet à surveiller, on reconnaît l'objet comme objet mobile au cas où on ne peut associer l'objet à surveiller à un objet de l'image actuelle.

9. Procédé selon l'une quelconque des revendications précédentes,
**caractérisé en ce que**
l'objet dont la taille est inférieure à un second seuil de dimension prédéfini, et les objets dont les formes ne remplissent pas des conditions prédéfinies, n'ont pas été reconnus comme objets en mouvement et ne permettent pas une comparaison en fonction de l'objet pour leurs signaux images.

10. Procédé selon l'une quelconque des revendications précédentes,
**caractérisé en ce qu'**
on déclenche une alarme objet pour des objets reconnus comme mobile.

11. Procédé selon l'une quelconque des revendications précédentes,
**caractérisé en ce qu'**
on supprime la surveillance des objets au cas où ceux-ci n'ont subi aucun mouvement.

12. Procédé selon l'une quelconque des revendications précédentes,
**caractérisé en ce que**
pour évaluer le mouvement intérieur d'une zone de recherche prédéterminée pour des vecteurs de mouvement possibles, on détermine un critère de qualité, on considère l'évaluation comme fiable si le vecteur de mouvement ayant le meilleur critère de qualité présente un critère de qualité significativement meilleur que les autres vecteurs de mouvement possibles, tandis que sinon l'évaluation est par ailleurs évaluée comme non fiable.

13. Procédé selon l'une quelconque des revendications précédentes,
**caractérisé en ce que**
le mouvement de l'objet se détermine par le décalage des points images obtenus par un masque objet.

14. Procédé selon l'une quelconque des revendications précédentes,
**caractérisé en ce que**
la détermination des masques objets se fait par la détection de variation à la précision du point image, et chaque zone d'image cohérente, reconnue comme modifiée, reçoit une caractéristique.

15. Procédé selon l'une quelconque des revendications précédentes,
**caractérisé en ce que**
pour déterminer l'association entre l'objet à surveiller et un objet d'image actuelle, on superpose les masques objets de l'image actuelle aux masques objets de l'image actuelle précédente en tenant compte du mouvement prévisionnel de l'objet et, pour une association non équivoque, il faut que les rectangles des différents objets se chevauchent.

16. Procédé selon l'une quelconque des revendications précédentes,
**caractérisé en ce que**
l'amplitude de l'objet en mouvement se détermine de manière pondérée en fonction de la position de l'image.

17. Procédé selon l'une quelconque des revendications précédentes,
**caractérisé en ce que**
la première image de référence est copiée comme seconde image de référence si aucun objet n'est surveillé et si tous les objets de l'image actuelle n'ont pas été reconnus comme des objets en mouvement.

18. Procédé selon l'une quelconque des revendications précédentes,
**caractérisé en ce que**
les blocs images avec les objets qui n'effectuent aucun mouvement, sont copiés dans une mémoire tampon à partir de la première image de référence, et après variation de la première image de référence, on copie les blocs images avec les objets sans mouvement de la mémoire tampon, pour revenir de nouveau à l'image de référence.

19. Procédé selon l'une quelconque des revendications précédentes,
**caractérisé en ce qu'**
on remplace la première image de référence par l'image actuelle s'il n'y a pas d'objet mobile ou d'objet ayant une évaluation de mouvement fiable, et si d'autre part la première image de référence est remplacée par une image actuelle suivante.
